# EUROPÄISCHE PATENTSCHRIFT

(11) **EP 2 219 900 B1**
(45) Veröffentlichungstag und Bekanntmachung des Hinweises auf die Patenterteilung: **20.02.2013**
(21) Anmeldenummer: 08858813.2
(22) Anmeldetag: 28.11.2008
(51) Int. Cl.: B60L 13/03, B60L 13/10

(54) **MAGNETSCHWEBEBAHN MIT NUTSCHRÄGUNG**
MAGLEV RAILWAY WITH OBLIQUE GROOVES
TRAIN À SUSTENTATION MAGNÉTIQUE

(30) Priorität: 10.12.2007 DE 102007059504
(43) Veröffentlichungstag der Anmeldung: 25.08.2010
(73) Patentinhaber: ThyssenKrupp Transrapid GmbH, 34127 Kassel (DE)
(72) Erfinder: LÖSER, Friedrich, 85521 Riemerling (DE); ZHENG, Qinghua, 82024 Taufkirchen (DE); MILLER, Luitpold, 85521 Ottobrunn (DE)
(74) Vertreter: Lorenz, Bernd Ingo Thaddeus
(86) Internationale Anmeldenummer: PCT/DE2008/001972
(87) Internationale Veröffentlichungsnummer: WO 2009/074128

(56) Entgegenhaltungen:
- EP-A- 1 322 027
- DE-A1- 3 041 940
- DE-C1- 19 829 052

## Beschreibung

Die Erfindung betrifft eine Magnetschwebebahn der im Oberbegriff des Anspruchs 1 angegebenen Gattung.

Bekannte Magnetschwebebahnen dieser Art (z. B. DE 30 41 940 C2, DE 10 2004 012 748 A1) zeichnen sich durch ein kombiniertes Trag-, Antriebs- und Energieerzeugungssystem aus. Dieses setzt sich aus mehreren, am Fahrzeug und am Fahrweg angebrachten, miteinander wechselwirkenden Komponenten zusammen.

Die Funktion "Tragen" wird mit Hilfe wenigstens eines, am Fahrzeug befestigten Tragmagneten realisiert, der das Fahrzeug während des normalen Fahrbetriebs in einem Schwebezustand bezüglich des Fahrwegs hält. Der Tragmagnet weist zu diesem Zweck eine Mehrzahl von in Fahrtrichtung hintereinander angeordneten Magnetpolen auf, die aus Eisenkernen und diese umgebenden Wicklungen bestehen. Die Kerne bilden abwechselnd Nord- und Südpole und enden an einer Polebene, die während des Fahrbetriebs mit einem Abstand von z. B. 10 mm einer am Fahrweg angebrachten Reaktionsschiene gegenüberliegt.

Die Funktion "Antrieb" wird z. B. mittels einer Reaktionsschiene in Form eines Langstators realisiert, der mit in Fahrtrichtung abwechselnd hintereinander angeordneten Zähnen und Nuten versehen ist, in die meistens eine dreiphasige Wechselstrom-Wicklung eingelegt ist, mittels derer ein elektromagnetisches, in Fahrtrichtung fortschreitendes Wanderfeld erzeugt wird. Der Langstator mit seinen Wechselstrom Wicklungen und die Tragmagnete mit den von ihnen erzeugten Magnetfeldern bilden einen synchronen Langstator-Linearmotor, der das Fahrzeug mit der Ausbreitungsgeschwindigkeit des Wanderfelds antreibt. Die in Fahrtrichtung vorderen und hinteren Kanten bzw. Seitenflächen der Magnetpolkeme und die Zähne des Langstators erstrecken sich senkrecht zur Fahrtrichtung, wobei die Zahn/Nut-Teilung z. B. 86 mm und die Magnetpolteilung, bezogen auf zwei gleichnamige Pole, z. B. 516 mm oder etwas mehr oder weniger beträgt.

Zur Realisierung der Funktion "Energieerzeugung", unter welcher im Rahmen dieser

Anmeldung die Erzeugung elektrische Energie im Fahrzeug verstanden wird, gibt es verschiedene Möglichkeiten. Die Erzeugung elektrischer Energie dient dem Zweck, den Energiebedarf der Tragmagnetwicklungen und von sonstigen, im Fahrzeug vorhandenen, Strom verbrauchenden Aggregaten wie z. B. Klima- und Beleuchtungsanlagen, benötigten Steuer- und Regelvorrichtungen usw. zu decken. Eine Möglichkeit zur Energieerzeugung besteht in der Anordnung von Stromschienen am Fahrweg und von diesen zugeordneten Stromabnehmern am Fahrzeug. Eine weitere Möglichkeit besteht darin, längs des Fahrwegs einen als Sender ausgebildeten Primärleiter und am Fahrzeug eine diesem zugeordnete Empfängerspule anzuordnen. Schließlich ist es möglich, die Magnetpole mit in sie eingelegten, einen Lineargenerator bildenden Wicklungen zu versehen. Diese werden während der Fahrt des Fahrzeugs je nach dem, ob der betreffende Magnetpol gerade einem Zahn oder eine Nut des Langstators gegenübersteht, von unterschiedlichen magnetischen Flüssen durchflutet, wodurch in ihnen eine elektrische Spannung induziert wird, die über Hochsetzsteller und ggf. Gleichrichter den verschiedenen Verbrauchern zugeführt oder zur Aufladung von ebenfalls im Fahrzeug mitgeführten Batterien benutzt wird.

Die Erzeugung von elektrischer Energie mit Hilfe von Lineargeneratoren bringt vor allem den Vorteil mit sich, dass sie keine zusätzlichen Ausrüstungsteile am Fahrweg wie Stromschienen, Primärleiter od. dgl. erfordert. Ein unvermeidbarer Nachteil besteht jedoch darin, dass der Betrieb von Lineargeneratoren erst bei größeren Fahrzeuggeschwindigkeiten, z. B. solchen oberhalb von 100 km/h, ausreichend gut funktioniert. Daher wird bei der praktischen Anwendung von Magnetschwebebahnen vorgesehen, den Fahrweg in Langsamfahrbereichen mit zusätzlichen Stromschienen, Primärleitern od. dgl. und/oder das Fahrzeug mit so vielen Batterien auszurüsten, dass auch dort, wo der Lineargenerator allein nicht ausreicht, dem Fahrzeug genügend elektrische Energie zur Verfügung gestellt werden kann.

Ein weiteres Problem beim Betrieb eines Magnetschwebefahrzeugs mit Hilfe eines Langstator-Linearmotors besteht darin, dass die Tragmagnete während der Fahrt aufgrund der Zahn/Nut-Geometrie des Langstators periodischen, auch durch den Antrieb beeinflussten Lastwechseln unterliegen, die zu periodischen Änderungen sowohl der Kräfte als auch der Nickmomente fuhren. Dort, wo ein Magnetpol einem Zahn des Langstators gegenübersteht, wird die volle Anziehungskraft erreicht, wohingegen im Bereich einer Nut des Langstators die Anziehungskraft praktisch Null ist. Diese ständigen Änderungen machen sich als so genannter Nutripple besonders stark in den Langsamfahrbereichen des Fahrwegs bemerkbar. Bei einem praktischen Ausführungsbeispiel mit einer Zahn/Nut-Teilung von z. B. 86 mm führt das bei einer Fahrgeschwindigkeit von 100 km/h und weniger zu Schwankungen bzw. zu einem Nutripple mit einer Frequenz von ca. 320 Hz und weniger. Das ist unerwünscht, da die dadurch verursachten, mechanischen Schwingungen die Dauerfestigkeit und damit auch die Lebensdauer des Fahrwegs sowie den Fahrkomfort und die Geräuschentwicklung beeinträchtigen können. Derartige Schwingungen können bisher nur sehr schwer und unter Anwendung von großen Massen, großen Mengen an Schaumstoff od. dgl. gedämpft werden. Oberhalb von z.B. 320 Hz sind diese Schwingungen und ihre Folgen dagegen vergleichsweise leicht beherrschbar von daher von untergeordneter Bedeutung.

Ausgehend davon liegt der Erfindung das technische Problem zugrunde, die Magnetschwebebahn der eingangs bezeichneten Gattung so auszubilden, dass störende Schwingungen bzw. Nutripples in den Langsamfahrbereichen auch ohne die Anwendun aufwendiger Dämpfungsmittel weitgehend vermieden werden.

Zur Lösung dieses Problems sieht die Erfindung die kennzeichnenden Merkmale des Anspruchs 1 vor.

Die Erfindung bringt den Vorteil mit sich, dass dadurch, dass die Schrägung der Zähne und Nuten des Langstators relativ zu den Polkernen des Tragmagneten nur in den Langsamfahrbereichen vorgesehen wird, zwei Funktionen erfüllt werden. Zum einen ist in den Schnellfahrbereichen eine ausreichende Energieversorgung durch die Lineargeneratoren sichergestellt, da hier die Parallelität der Kerne und Lineargenerator-Wicklungen der Tragmagnetpole einerseits und der Zähne und Nuten des Langstators andererseits für eine optimale Energieübertragung sorgt. Zum anderen können in den Langsamfahrbereichen die sonst bei niedrigen Frequenzen auftretenden, periodischen Anregungen weitgehend minimiert werden, so dass aufwendige Dämpfungsmaßnahmen nicht erforderlich sind. Der Nachteil, dass aufgrund der Schrägung mittels der Lineargeneratoren weniger Energie als ohne diese Schrägung erzeugbar ist, weil die Lineargenerator-Wicklungen in diesem Fall immer nur Teilen der Zähne bzw. Nuten des Langstators gegenüberstehen, wird im Rahmen der vorliegenden Erfindung als nicht wesentlich erachtet, da für die Langsamfahrbereiche ohnehin zusätzliche Mittel wie Stromschienen, Batterien od. dgl. vorgesehen werden müssen.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 grob schematisch den üblichen Aufbau eines Fahrwegs für Magnetschwebebahnen;
Fig. 2 die übliche relative Lage eines Langstators zu den Tragmagneten einer Magnetschwebebahn;
Fig. 3 in vergrößerter Darstellung einer perspektivische Ansicht eine Magnetpolkerns eines Tragmagneten eines Magnetschwebefahrzeugs;
Fig. 4 ein erstes Ausführungsbeispiel einer erfindungsgemäßen Ausbildung eines Langstators und eines Tragmagneten in einem Langsamfahrbereich des Fahrwegs nach Fig. 1; und
Fig. 5 und 6 zwei weitere Ausführungsbeispiele der Erfindung für die Ausbildung eines Langstators und eines Tragmagneten.

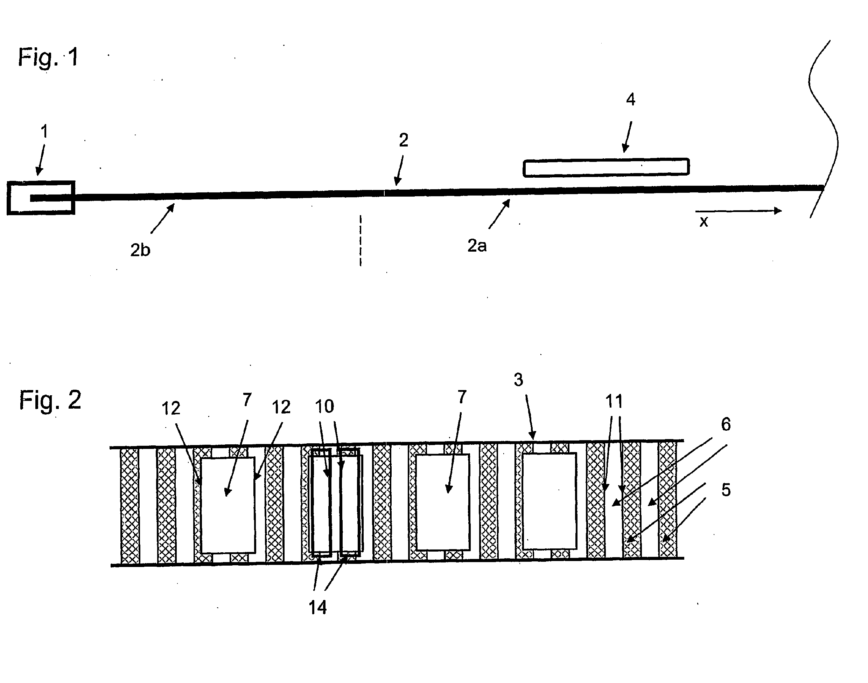

In Fig. 1 sind schematisch ein Bahnhof 1 und ein von diesem ausgehender Fahrweg 2 einer Magnetschwebebahn dargestellt. Der Fahrweg 2 enthält in bekannter Weise einen in Fig. 2 schematisch in einer Unteransicht dargestellten Langstator 3, der in einer durch einen Pfeil x angegebenen Fahrtrichtung eines Magnetschwebefahrzeugs 4 (Fig. 1) abwechselnd Zähne 5 und Nuten 6 aufweist, in die nicht dargestellte Wechselstrom-Wicklungen eingelegt werden, um längs des Fahrwegs 2 ein elektromagnetisches Wanderfeld zu erzeugen. In dem Fahrzeug 4 ist wenigstens ein Tragmagnet angeordnet, der eine Mehrzahl von in Fahrtrichtung x aufeinander folgenden Magnetpolen abwechselnder Polarität aufweist. Die Tragmagnetpole enthalten in der Regel aus Eisen bestehende Kerne 7 und diese umgebende, von Gleichstrom durchflossene, nicht dargestellte Wicklungen, obwohl es auch möglich wäre, ihnen zusätzlich Permanentmagnete zuzuordnen. Zur Vereinfachung der Darstellung sind in Fig. 2 nur die Kerne 7 und ihre Umrisse dargestellt.

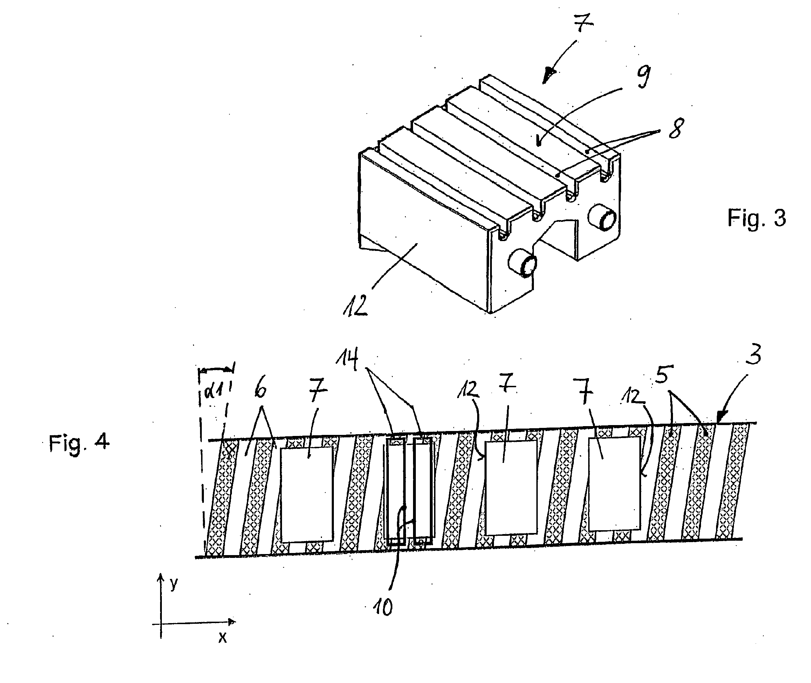

Fig. 3 zeigt einen einzelnen derartigen Kern 7 vergrößert. Der Kern 7 enthält eine Anzahl von parallelen Nuten 8, die in seine Magnetpolfläche 9 eingearbeitet sind, die den Zähnen 5 und Nuten 6 des Langstators 3 gegenübersteht. Die Nuten 8 dienen zur Aufnahme von in Fig. 2 angedeuteten Wicklungen 10 eines Lineargenerators, der zur berührungslosen Erzeugung elektrischer Energie im Fahrzeug 4 geeignet ist. Die übliche relative Lage der Kerne 7, Wicklungen 10, Zähne 5 und Nuten 6 ist ebenfalls in Fig. 2 angedeutet. Danach erstrecken sich die Zähne 5 und Nuten 6 des Langstators 3 im Wesentlichen senkrecht zur Fahrtrichtung x. Stren genommen gilt dies hauptsächlich für in Fahrtrichtung x vordere und hintere, parallel zur y-Richtung angeordnete Kanten bzw. die Nuten 6 begrenzende Seitenflächen 11 der Zähne 5. Außerdem zeigen Fig. 2 und 3, dass die Kerne 7 mit im Wesentlichen ebenen Seitenflächen 12 versehen sind, die im eingebauten Zustand parallel zu den Seitenflächen 11 der Zähne 5 des Langstators 3 liegen. Außerdem sind die in die Magnetpolflächen 9 eingearbeiteten Nuten der Kerne 7 parallel zu deren Seitenflächen 12 angeordnet (Fig. 2 und 3). Schließlich ist die Anordnung insgesamt so getroffen, dass die in den Nuten 8 liegenden Teile der Lineargenator-Wicklungen 10 im Wesentlichen parallel zu den Seitenflächen 11 und 12 liegen, während Köpfe 14 dieser Wicklungen 10 gemäß Fig. 2 außerhalb der Kerne 7 angeordnet und x-Richtung erstreckt sind. Die Breite der Wicklungen 10 bzw. von deren Wicklungsfenstern in x-Richtung entspricht etwa der Breite eines Zahns 5 bzw. einer Nut 6 des Langstators 3, um eine maximale induktive Energieerzeugung zu erhalten.

Zur Vereinfachung der nachfolgenden Beschreibung von erfindungsgemäßen Ausführungsbeispielen wird im Folgenden und auch in den Ansprüchen allgemein nur auf die Richtungen der Zähne 5, Nuten 6, Kerne 7 und Wicklungen 10 verwiesen. Es versteht sich jedoch, dass damit tatsächlich der Verlauf der genannten Kanten bzw. Seitenflächen 11 und 12 und der Nuten 8 gemeint ist.

Beim Betrieb des Magnetschwebefahrzeugs 4 wird mit Hilfe der vorhandenen Tragmagnete ein Schwebezustand hergestellt, der zur Folge hat, dass die Magnetpolflächen 9 mit einem Abstand von z. B. 10 mm den Zähnen 5 des Langstators 3 gegenüberstehen. Gleichzeitig stellen die Tragmagnete in bekannter Weise das Erregerfeld für den aus dem Langstator 3, den darin befindlichen Wechselstrom-Wicklungen und den Tragmagneten gebildeten Langstator-Linearmotor bereit, der das Magnetschwebefahrzeug 4 antreibt.

Die Erzeugung elektrischer Energie im Fahrzeug 4 erfolgt während der Fahrt des Magnetschwebefahrzeugs 4 im Wesentlichen dadurch, dass aufgrund der Bewegung der Kerne 7 relativ zum Langstator 3 eine ständige Variation des zwischen den Magnetpolflächen 9 und den Zähnen 5 und Nuten 6 des Langstators 3 bestehenden Luftspalts bewirkt wird, wodurch sich auch der magnetische Fluss durch die Lineargenerator-Wicklungen ständig ändert. Infolgedessen wird in den Wicklungen 10, wie oben bereits erwähnt ist, eine elektrische Spannung induziert.

Die vom Lineargenerator abgegebene Spannung reicht bei Fahrzeuggeschwindigkeiten oberhalb von z. B. 100 km/h aus, um den gesamten Energiebedarf des Magnetschwebefahrzeugs 4 zu decken und die in ihm mitgeführten Bordbatterien aufzuladen. Dieser Zustand ist in Fig. 1 durch einen Schnellfahrbereich 2a des Fahrwegs 2 repräsentiert. Dagegen reichen die Lineargeneratoren in Langsamfahrbereichen 2b des Fahrwegs 2 nicht zur Deckung des Energiebedarfs aus. In diesen Langsamfahrbereichen 2b, in denen das Fahrzeug 4 z. B. vom Bahnhof 1 aus beschleunigt, vor einem Bahnhof 1 abgebremst und daher mit einer Geschwindigkeit von z. B. unter 100 km/h betrieben wird, sind Längs des Fahrwegs 2 zusätzliche, an sich bekannte und daher nicht dargestellte Mittel zur Energieübertragung bzw. -erzeugung vorgesehen.

Magnetschwebebahnen der beschriebenen Art sind dem Fachmann z. B. aus den Drucikschriften DE 30 41 940 C2, DE 34 10 119 C2, DE 10 2004 012 748 A1 und DE 10 2004 056 439 A1 bekann.

Zur Vermeidung der bei langsamer Fahrt auftretenden, eingangs erläuterten Schwingungen (Nutripples) wird erfindungsgemäß vorgeschlagen, die Zähne 5 und Nuten 6 des Langstators 3 einerseits und die Kerne 7 und Wicklungen 10 andererseits in den Schnellfahrbereichen 2a wie bisher parallel zueinander, in den Langsamfahrbereichen 2b dagegen schräg relativ zueinander, d. h. mit einem von 0° abweichenden bzw. zwischen 0° und 90° liegenden Winkel anzuordnen. Ein Ausfubrungsbeispiel hierfür ist in Fig. 4 dargestellt. Wähnend die Tragmagnete bzw. ihre Kerne 7 im Fahrzeug 4 wie üblich, d. h. mit ihren Kanten im Wesentlichen senkrecht zur Fahrtrichtung ausgerichtet sind (Fig. 2), sind alle Zähne 5 und Nuten 6 des Langstators 3 schräg zur Fahrtrichtung x angeordnet. Diese Schrägung zwischen den Kernen 7 und den Zähnen 5 und Nuten 6 hat zur Folge, dass die eingangs erläuterten, periodischen. Anregungen, die insbesondere bei kleinen Fahrgeschwindigkeiten unter ca. 100 km/h und mit Frequenzen von z. B. 320 Hz und weniger auftreten, stark nachlassen und durch geeignete Wahl eines Schrägungswinkels α1 (Fig. 4) minimiert werden können. Die aufgrund der Schrägung weiter verschlechterte Wirkung der Lineargeneratoren bzw. der Wicklungen 10, die wie die Kerne 7 schräg zu den Zähnen 5 und Nuten 6 des Langstators 3 stehen, ist aus den oben genannten Gründen nicht wesentlich.

In den Schnellfahrbereichen 2a arbeitet der Lineargenerator dagegen wie bisher optimal.

Auf das Antriebs- und Tragverhalten hat die Schrägung keinen wesentlichen Einfluss, so dass sie hinsichtlich der Vermeidung des Nutripple optimiert werden kann. Hierzu ist es besonders zweckmäßig, den Schrägungswinkel 1α so zu wählen, dass die von den Kernen 7 und Zähnen 5 gemeinsam überdeckten Flächen im Wesentlichen immer gleich groß sind.

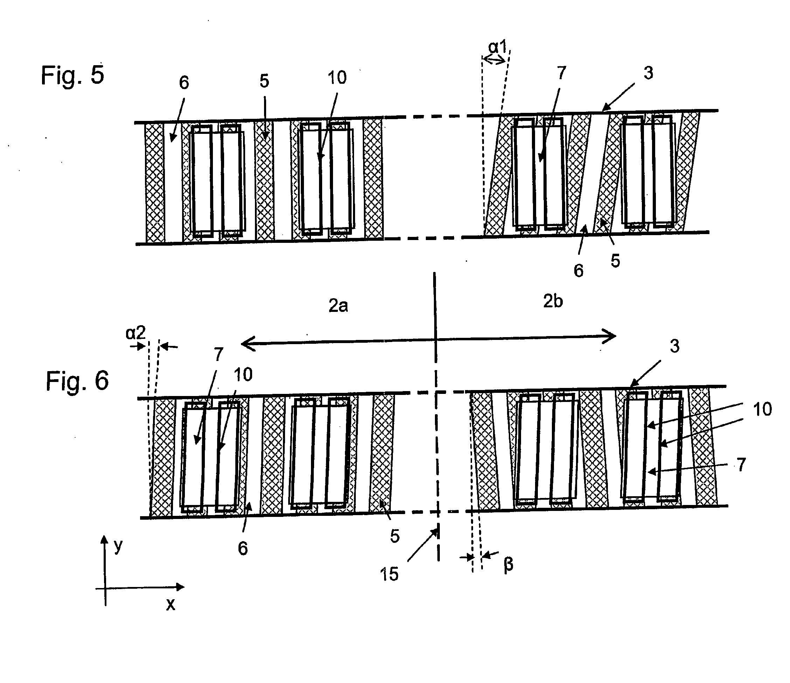

Die durch die Erfindung vorgesehenen Änderungen des Fahrwegs 2 ergeben sich beispielhaft aus Fig. 5 und 6.

Das Ausführungsbeispiel nach Fig. 5 sieht vor, in einem Schnellfahrbereich 2a die Anordnung so zu treffen, wie sie auch in Fig. 2 dargestellt ist. Die Zähne 5, Nuten 6, Kerne 7 und Wicklungen 10 sind hier sämtlich parallel zueinander und im Wesentlichen senkrecht zur Fahrtrichtung x , d. h. parallel zur γ-Richtung angeordnet. In den Langsamfahrbereichen 2b der Fig. 5 ist dagegen die anhand der Fig. 4 erläuterte Schrägung mit dem Schrägungswinkel α1 vorgesehen, wonach die Zähne 5 und Nuten 6 des Langstators 3 mit der Fahrtrichtung x einen von 90° abweichenden Winkel bilden.

Das Ausführungsbeispiel nach Fig. 6 unterscheidet sich vom Ausführungsbeispiel nach Fig. 5 dadurch, dass in den Schnellfahrbereichen 2a sowohl die Zähne 5 und Nuten 6 als auch die Kerne 7 und Wicklungen 10 mit einem Winkel α2 schräg zu einer Senkrechten (= γ-Richtung) zur Fahrtrichtung x angeordnet sind. Dadurch werden wie bei der Anordnung nach Fig. 2 in den Schnellfahrbereichen 2a günstige Bedingungen hinsichtlich der induktiven Energieerzeugung mit Hilfe der Lineargeneratoren geschaffen, da die Kerne 7 und Wicklungen 10 parallel zu den Zähnen 5 und Nuten 6 erstreckt sind. In den Langsamfahrbereichen 2b der Fig. 6 sind dagegen die Zähne 5 und Nuten 6 des Langstators 3 in entgegengesetzter Richtung mit einem Winkel β schräg zur γ-Richtung angeordnet. Die Größe des Winkels β ist vorzugsweise gleich der Größe des Winkels α2, so dass die Zähne 5 und Nuten 6 in den Bereichen 2a und 2b spiegelsymmetrisch zu einer gedachten, in y-Richtung verlaufenden Ebene 15 angeordnet sind. Daher gilt für die Langsamfahrbereiche 2b wie in Fig. 5, dass die Kerne 7 und Wicklungen 10 schräg zu den Zähnen 5 und Nuten 6 erstreckt sind und der Nutripple dadurch wesentlich reduziert wird. Um gleiche Schrägungen wie in Fig. 5 herzustellen, werden die Winkel α2 und β z. B. so gewählt, dass α1 = α2 + β gilt und daher die Schrägung in den Langsamfahrbereichen 2b der Fig. 6 genauso groß wie die in Fig. 5 ist.

Ein weiteres Ausführungsbeispiel der Erfindung konnte schließlich vorsehen, die Kerne 7 und Lineargenentor-Wicklungen 10 wie in Fig. 6 schräg Zur y-Richtung auszurichten, die Zähne 5 und Nuten 6 dagegen in den Schnellfabrbereichen 2a wie im linken Teil der Fig. 6 und in den Langsamfahrbereichen 2b wie in Fig. 2 anzuordnen.

Die Größe der im Einzelfall vorgesehenen Zahn/Nut-Period kann vom beispielhaft angegebenen Maß 86 mm genauso abweichen kann wie die beispielhaft angegebene Polteilung vom Maβ 516 mm. Dementsprechend können die Langsamfahrbereiche 2b für Geschwindigkeiten eingerichtet sein, die eine andere Geschwindigkeitsgrenze als die angegebene Grenze von ca. 100 km/h hat und in denen sich andere Frequenzen als 320 Hz und weniger ergeben. In Abhängigkeit davon können sich unterschiedliche Sebrägungswinkel α1, α2 und β als optimal erweisen. In allen Fällen sind die Schrägungswinkel zweckmäßig so zu wählen, dass periodische Anregungen und schädlichen Folgen minimiert und eliminiert und dadurch insbesondere die mechanische Beanspruchung der Bauteile und die Schallerzeugung verringert werden. Abgesehen davon stellt auch die aus Fig. 1 bis 6 ersichtliche Konfiguration des Langstators 3 und der Tragmagnete bzw. deren Magnetpole nur ein Beispiel dar, von dem je nach Bedarf abgewichen werden kann. Weiter ist klar, dass die beschriebene Anordnung auch in Bahnhöfen oder Haltepunkten verwendet werden kann, in denen die Magnetschwebefahrzeuge 4 nicht immer oder nur in Notfällen zum Stillstand gebracht werden In diesen Fällen ist es lediglich erforderlich, während einer ohne Halt erfolgenden Dunchfahrt eines Magnetschwebefahrzeugs 4 die zusätzliche externe Energieversorgung zu aktivieren oder die Bordbatterien einzuschalten, was bei Durchfahrtzeiten von wenigen Sekunden kein Problem darstellt.

## Patentansprüche

1. Magnetschwebebahn mit einem in einer Fahrtrichtung (x) erstreckten, Schnell- und Langsamfahrbereiche (2a, 2b) aufweisenden Fahrweg (2), wenigstens einem längs des Fahrwegs (2) verfahrbaren Fahrzeugs (4) und einem dem Fahrzeug (4) zugeordneten Trag-, Antriebs- und Energieerzeugungssystem, das einen am Fahrweg (2) angebrachten Langstator (3) mit in Fahrtrichtung (x) abwechselnd hintereinander angeordneten Zähnen (5) und zur Aufnahme von Wechselstrom-Wicklungen bestimmten Nuten (6), wenigstens einen im Fahrzeug (4) montierten Tragmagneten mit einer Mehrzahl von in Fahrtrichtung hintereinander angeordneten, durch Kerne (7) und Wicklungen gebildeten Tragmagnetpolen und einen Lineargenerator enthält, der in die Tragmagnetpole eingelegte Wicklungen (10) aufweist, **dadurch gekennzeichnet, dass** die Zähne (5) und Nuten (6) des Langstators (3) einerseits und die Kerne (7) und Lineargenerator-Wicklungen (10) des Tragmagneten andererseits in den Schnellfahrbereichen (2a) im Wesentlichen parallel, in den Langsamfahrbereichen (2b) dagegen unter einem von Null abweichenden Winkel (α1, α2, β) und schräg relativ zueinander angeordnet sind.

2. Magnetschwebebahn nach Anspruch 1, **dadurch gekennzeichnet, dass** die Kerne (7) und Lineargenerator-Wicklungen (10) des Tragmagneten im Wesentlichen senkrecht zur Fahrtrichtung (x) angeordnet sind, während die Zähne (5) und Nuten (6) des Langstators (3) in den Schnellfahrbereichen (2a) im Wesentlichen senkrecht zur Fahrtrichtung (x), in den Langsamfahrbereichen (2b) dagegen unter einem von 90° abweichenden Winkel zur Fahrtrichtung (x) erstreckt sind.

3. Magnetschwebebahn nach Anspruch 1, **dadurch gekennzeichnet, dass** die Kerne (7) und Lineargenerator-Wicklungen (10) unter einem von 90° abweichenden Winkel zur Fahrtrichtung (x) angeordnet sind, während die Zähne (5) und Nuten (6) des Langstators (3) in den Langsamfahrbereichen (2b) im Wesentlichen senkrecht zur Fahrtrichtung (x), in den Schnellfahrbereichen (2a) dagegen im Wesentlichen parallel zu den Kernen (7) und Wicklungen (10) des Tragmagneten angeordnet sind.

4. Magnetschwebebahn nach Anspruch 1, **dadurch gekennzeichnet, dass** die Kerne (7) und Lineargenerator-Wicklungen (10) des Tragmagneten unter einem von 90° abweichenden Winkel zur Fahrtrichtung (x) angeordnet sind und dass die Zähne (5) und Nuten (6) des Langstators (3) in den Schnellfahrbereichen (2a) im Wesentlichen parallel zu den Kernen (7) und Wicklungen (10), in den Langsamfahrbereichen (2b) dagegen mit Schrägungswinkeln (β) angeordnet sind, die zu denen in den Schnellfahrbereichen (2a) entgegengesetzt sind.

5. Magnetschwebebahn nach Anspruch 4, **dadurch gekennzeichnet, dass** die entgegengesetzt gerichteten Winkel (α2, β) gleich groß sind.

## Claims

1. A maglev train with a track (2) extending in a direction of travel (x) and having fast and slow sections (2a, 2b), at least one vehicle (4) which can be moved along the track (2) and a bearing, drive and energy-generating system assigned to the vehicle (4), which contains a long stator (3) attached on the track (2) with teeth (5) arranged alternately one behind the other in the direction of travel (x) and grooves (6) intended for accommodating alternating-current windings, at least one bearing magnet mounted in the vehicle (4), with a plurality of bearing magnet poles arranged one behind the other in the direction of travel and formed by cores (7) and windings, and a linear generator which has windings (10) inserted into the bearing magnet poles, **characterised in that** the teeth (5) and grooves (6) of the long stator (3) on the one hand and the cores (7) and linear-generator windings (10) of the bearing magnet on the other hand are arranged essentially parallel in the fast sections (2a) and by contrast at an angle (α1, α2, β) deviating from zero and in a skewed manner relative to one another in the slow sections (2b).

2. The maglev train according to Claim 1, **characterised in that** the cores (7) and linear-generator windings (10) of the bearing magnet are arranged essentially perpendicularly to the direction of travel (x), whilst the teeth (5) and grooves (6) of the long stator (3) are extended essentially perpendicularly to the direction of travel (x) in the fast sections (2a) and by contrast at an angle deviating from 90° to the direction of travel (x) in the slow sections (2b).

3. The maglev train according to Claim 1, **characterised in that** the cores (7) and linear-generator windings (10) are arranged at an angle deviating from 90° to the direction of travel (x), whilst the teeth (5) and grooves (6) of the long stator (3) are extended essentially perpendicularly to the direction of travel (x) in the slow sections (2b) and by contrast essentially parallel to the cores (7) and windings (10) of the bearing magnet in the fast sections (2a).

4. The maglev train according to Claim 1, **characterised in that** the cores (7) and linear-generator windings (10) of the bearing magnet are arranged at an angle deviating from 90° to the direction of travel (x) and **in that** the teeth (5) and grooves (6) of the long stator (3) are arranged essentially parallel to the cores (7) and windings (10) in the fast sections (2a) and by contrast with angles of skew (β) in the slow sections (2b), which are opposed to those in the fast sections (2a).

5. The maglev train according to Claim 4, **characterised in that** the oppositely directed angles (α2, β) are the same size.

## Revendications

1. Train à suspension magnétique comportant une voie de roulement (2) présentant des zones de conduite rapide et lente (2a, 2b) s'étendant dans une direction de conduite (x), au moins un véhicule (4) circulant le long de la voie de roulement (2) un système porteur, d'entraînement et de génération d'énergie coordonné au véhicule (4), qui contient un stator déployé (3) monté sur le véhicule (2) avec des dents (5) disposées en alternance les unes derrière les autres dans la direction de conduite (x) et des rainures (6) déterminées afin de recevoir des enroulements de courant alternatif, au moins un aimant de levage monté dans le véhicule (4) avec une pluralité de pôles d'aimant de levage disposés les uns derrière les autres dans la direction de conduite, formés par des noeuds (7) et des enroulements et un moteur linéaire, qui présente des enroulements (10) placés dans les pôles d'aimant de levage, **caractérisé en ce que** les dents (5) et les rainures (6) du stator déployé (3) d'un côté et les noyaux (7) et les enroulements de générateur linéaire (10) de l'aimant de levage d'un autre côté sont disposés dans les zones de conduite rapide (2a) essentiellement parallèlement, dans les zones de conduite lente (2b) au contraire en inclinaison les uns par rapport aux autres sous un angle différent de zéro (α1, α2, β).

2. Train à suspension magnétique selon la revendication 1, **caractérisé en ce que** les noyaux (7) et les enroulements de générateur linéaire (10) des aimants de levage sont disposés essentiellement perpendiculairement à la direction de conduite (x), alors que les dents (5) et les rainures (6) du stator déployé (3) sont étendues dans les zones de conduite rapide (2a) essentiellement perpendiculairement à la direction de conduite (x), dans les zones de conduite lente (2b) au contraire en formant un angle différent de 90° par rapport à la direction de conduite (x).

3. Train à suspension magnétique selon la revendication 1, **caractérisé en ce que** les noyaux (7) et les enroulements de générateur linéaire (10) sont disposés à un angle différent de 90° par rapport à la direction de conduite (x), alors que les dents (5) et les rainures (6) du stator déployé (3) sont disposés dans les zones de conduite lente (2b) essentiellement perpendiculairement à la direction de conduite (x), dans les zones de conduite rapide (2a) au contraire essentiellement parallèlement aux noyaux (7) et aux enroulements (10) des aimants de levage.

4. Train à suspension magnétique selon la revendication 1, **caractérisé en ce que** les noyaux (7) et les enroulements de générateur linéaire (10) des aimants de levage sont disposés à un angle différent de 90° par rapport à la direction de conduite (x) et **en ce que** les dents (5) et les rainures (6) du stator déployé (3) sont disposés dans les zones de conduite rapide (2a) essentiellement parallèlement aux noyaux (7) et aux enroulements (10), dans les zones de conduite lente (2b) au contraire à des angles d'inclinaison (β), qi sont opposés à ceux dans les zones de conduite rapide (2a).

5. Train à suspension magnétique selon la revendication 4, **caractérisé en ce que** les angles alignés en sens contraire (α2, β) sont de grandeur identique.
